# EUROPÄISCHE PATENTSCHRIFT

(11) **EP 4 545 912 B1**
(45) Veröffentlichungstag und Bekanntmachung des Hinweises auf die Patenterteilung: **02.12.2026**
(21) Anmeldenummer: 24205361.9
(22) Anmeldetag: 08.10.2024
(51) Int. Cl.: G01D 5/249, G01D 5/245, H02K 11/215, H02K 41/03

(54) **ANTRIEB MIT MAGNETISCHER ABSOLUTCODIERUNG**
DRIVE WITH MAGNETIC ABSOLUTE ENCODING
ENTRAÎNEMENT À CODAGE ABSOLU MAGNÉTIQUE

(30) Priorität: 26.10.2023 DE 102023129609
(43) Veröffentlichungstag der Anmeldung: 30.04.2025
(73) Patentinhaber: SICK AG, 79183 Waldkirch (DE)
(72) Erfinder: Sellmer, Christian, 78166 Donaueschingen (DE); Thomae, Dominic, 79111 Freiburg (DE); Braun, Thomas, 88400 Biberach (DE)

(56) Entgegenhaltungen:
- EP-A2- 2 378 253
- KR-A- 20150 145 407
- US-A1- 2009 243 598

## Beschreibung

Die vorliegende Erfindung betrifft das Gebiet magnetischer Absolutwertgeber zur Bestimmung einer Absolutposition bezüglich einer Position, insbesondere einer Längenposition, zweier, relativ zueinander verstellbarer Körper. Anwendungsbereich der Erfindung sind insbesondere Linearmotoren, die, bei Einsatz von Dauermagneten, eine spezielle Klasse bürstenloser Servomotoren bilden. Der Linearmotor erzeugt keine drehende Bewegung beim angetriebenen Körper, sondern bewegt diesen geradlinig oder entlang einer Kurvenbahn. Linearmotoren werden deshalb insbesondere dann eingesetzt, wenn eine direkte translatorische Bewegung umgesetzt werden muss. Eine Anwendung für Rotationsmotoren ist ebenfalls möglich.

Bei einem Linearmotor kann sich der bestromte Teil des Motors translatorisch bewegen, während der elektrisch passive, d.h. nicht bestromte Teil stillsteht, falls das Magnetfeld des stillstehenden Teils durch aneinandergereihte Permanentmagnete erzeugt wird. Die Reaktionskräfte, welche der sich bewegende aktive Körper auf den stillstehenden passiven Körper ausübt, müssen von dem Maschinenbett bzw. der Anlage aufgenommen werden. Weil Linearmotoren sehr hohe Beschleunigungen und Verfahrgeschwindigkeiten erreichen, eignen sie sich besonders gut für den Einsatz in Werkzeugmaschinen, Positionierungssystemen.

Grundsätzlich werden Absolutwertgeber insbesondere als Weg- oder Winkelmessgeräte an Werkzeugmaschinen, in der Automatisierungstechnik und an Mess- und Prüfeinrichtungen eingesetzt.

Absolutwertgeber geben die Absolutposition zumeist in Form eines digitalen Zahlenwerts aus. Da dieser Zahlenwert über die gesamte Messlänge bzw. Messbereich des Absolutwertgebers eindeutig ist, wird keine anfängliche Referenzfahrt, wie z.B. bei Inkrementalgebern, benötigt. Dagegen messen Inkrementalgeber eine relative Positionsänderung anhand einer Inkrementveränderung, wobei ein Inkrement als eine Basisstruktur aus Codeelementen einer sogenannten Maßverkörperung angesehen werden kann. Die Maßverkörperung ist in diesem Zusammenhang eine Verkörperung von Inkrementinformationen mittels abtastbaren Codeelementen.

Inkrementalgeber zählen in der Regel eine Anzahl von Inkrementen, die bei einer Positionsänderung überfahren werden. Hierbei ist die Relativposition nur bekannt in Bezug auf eine Position zu Beginn der Messung bzw. kann als Absolutinformation durch eine Referenzfahrt, z.B. an einen Anschlag oder an eine Referenzposition, ermittelt werden.

Neben optischen Absolutwertgebern, bei denen mehrere Codespuren einer Maßverkörperung mithilfe von optoelektronischen Sensoren parallel abgetastet werden, werden in verschmutzungsanfälligen Umgebungen oftmals auch magnetische Absolutwertgeber eingesetzt. Bei diesen erfolgt die Kodierung entweder durch Lageauswertung eines rotierenden Magneten oder durch Auswertung eines durch eine Maßverkörperung modulierten Magnetfeldes nach dem Nonius-Prinzip.

Weiterhin sind magnetische Absolutwertgeber bekannt, welche nach dem Code-Prinzip arbeiten. Hierbei sind die Codeelemente als magnetische Dipole ausgebildet, wobei je nach Ausrichtung eines jeweiligen Codeelements in der Maßverkörperung ein Nordpol oder ein Südpol abgetastet wird, wodurch ein Binärcode definiert wird. Es werden in jeder Winkel- oder Längenposition des Absolutwertgebers mehrere Codeelemente gleichzeitig abgetastet, wobei die Kodierung entlang der Maßverkörperung so gewählt ist, dass ein jeweiliges, bei einer bestimmten Position abgetastetes Bitmuster eindeutig ist.

In der Anmeldung DE 10 2018 118 477 A1 wird ein magnetischer Absolutwertgeber beschrieben zur Bestimmung einer Absolutposition zweier zueinander um eine Längen- oder Winkelposition verschieb- bzw. drehbar gelagerter Körper. Dabei lehrt die Anmeldung eine Absolutspur definierende Maßverkörperung, welche eine Vielzahl magnetischer Codeelemente umfasst. Eine Magnetfeldsensoranordnung tastet die aus den Codeelementen gebildete magnetische Maßverkörperung ab. Als absolute Codierung schlägt die DE 10 2018 118 477 A1 vor, dass jedes der ersten Codeelemente der Maßverkörperung um einen jeweiligen Kodierungsversatz versetzt zu einer dem jeweiligen ersten Codeelement zugeordneten virtuellen Referenzposition angeordnet ist, wobei die Referenzposition äquidistant und versatzfrei längs der Absolutspur angeordnet ist. D.h. die Codeelemente werden in oder gegen die Bewegungsrichtung der Körper versetzt angeordnet.

In dem Patent EP 2 404 142 B1 wird alternativ die Verwendung von Kerben zur Ausbildung einer Maßverkörperung vorgeschlagen, welche parallel zueinander in Bewegungsrichtung eines sich über die Maßverkörperung bewegenden Körpers positioniert sind und welche sich durch ihre Kerbtiefe oder Kerbbreite unterscheiden und so eine Position des sich bewegenden Körpers kodieren können.

Das Prinzip der vorgeschlagenen Kodierungen basiert darauf, dass die Maßverkörperung ein magnetisches Streufeld erzeugt bzw. ein Streufeld eines extern erzeugten Magnetfeldes beeinflusst.

Die Absolutspur ist in Richtung einer Verstellrichtung, bzw. der Bewegungsrichtung eines Körpers, d.h. kreisförmig oder linear, angeordnet. Der in der DE 10 2018 118 477 A1 vorgeschlagene Kodierungsversatz der Codierelemente erfolgt dabei ausschließlich in Richtung der Absolutspur, d.h. entlang der linearen oder kreisförmigen Bewegungsrichtung des Körpers oder senkrecht zu dieser, d.h. in bzw. aus der Bewegungsebene des Körpers heraus. D.h. die Codierelemente sind in einer Ausführungsform in die Bewegungsebene des Körpers hinein oder aus dieser heraus versetzt, bzw. nach unten oder oben zu dieser verschoben. D.h. die DE 10 2018 118 477 A1 lehrt eine quer zur Bewegungsrichtung des Körpers versatzfreie Anordnung der Codierelemente, d.h. eine äquidistante und gleichmäßige Anordnung der Codierelemente quer zur Spurrichtung. Stattdessen sind die Codierelemente in die Spurebene hinein oder aus dieser heraus versetzt.

Sowohl die in EP 2 404 142 B1 als auch die in DE 10 2018 118 477 A1 beschriebene Absolutspur bildet eine zusätzliche Spur zu einer Antriebspur eines Antriebes. D.h. die Absolutspur und deren Codeelemente müssen zusammen mit der Sensorik an einen entsprechenden Antrieb angebracht werden. Das Anbringen erfordert einen zusätzlichen Aufwand und insbesondere zusätzlichen Platzbedarf für die Maßverkörperung des Gebers bei der Herstellung des Antriebs. Ferner steigert es die Kosten des Antriebs. Insbesondere das Anbringen des Absolutwertgebers an einen fertig hergestellten Antrieb ist folglich mit einem aufwändigen Umbau verbunden.

Die EP 2 378 253 A2 beschreibt einen magnetischen Antrieb, bei dem in einer Ausführungsform zur Ausbildung einer Maßverkörperung unterschiedlich lange magnetische Antriebselemente quer zu der Spurrichtung angeordnet sind.

Es ist daher eine Aufgabe der Erfindung, einen magnetischen Antrieb mit einem Absolutwertgeber bereitzustellen, wobei der Geber nur einen geringen zusätzlichen Raum in dem Antrieb benötigt und es insbesondere keiner zusätzlichen Maßverkörperung zur Bestimmung der Absolutposition des sich bewegenden Körpers bedarf.

Die Aufgabe wird gelöst durch den magnetischen Antrieb mit einem Absolutwertgeber nach Anspruch 1, durch das Verfahren nach Anspruch 14. Weitere Ausführungsformen sind Gegenstand der abhängigen Ansprüche.

Der erfindungsgemäße magnetische Antrieb weist einen Absolutwertgeber zur Bestimmung einer Absolutposition eines ersten Körpers des magnetischen Antriebs auf, der sich verstellbar zu einem zweiten Körper des magnetischen Antriebs um eine Position, insbesondere eine Längenposition, zu diesem verschiebt, wobei der erste Körper Sensorelemente aufweist, um aus einer Maßverkörperung des Absolutwertgebers die Absolutposition zu ermitteln und wobei der zweite Körper in einer Spurebene entlang einer Spurrichtung, insbesondere äquidistant, voneinander beabstandete zu einer Magnetspur angeordnete magnetische Antriebselemente aufweist, wobei die Antriebselemente teilweise Codierbereiche aufweisen und die Maßverkörperung durch die Codierbereiche ausgebildet ist, dadurch gekennzeichnet, dass die Codierbereiche durch eine Beschichtung und/oder Ablation Antriebselementes ausgebildet sind.

Da die Antriebselemente Codierbereiche aufweisen, ist die Maßverkörperung durch die Anordnung der Antriebselemente in der Spurebene ausgebildet. Folglich muss die Maßverkörperung nicht als ein separates Bauteil ausgebildet sein. Dadurch kann die Bauform des magnetischen Antriebs kompakt ausgestaltet sein.

Weiter vereinfacht sich der Herstellungsprozess. Die Codierbereiche bilden in ihrer Gesamtheit die Maßverkörperung.

Unter einer Spurebene ist vorliegend die Ebene zu verstehen, welche sich durch die Anordnung der Antriebselemente des zweiten Körpers ergibt und entlang bzw. innerhalb der sich der erste Körper im Wesentlichen bewegt. Dabei kann die Ebene bei einem linearen Antrieb im Wesentlichen als eine Fläche, d.h. als eine planare, ebene geometrische Fläche ausgebildet sein. Alternativ dazu kann die Ebene bei einem rotierenden Antrieb als die Mantelfläche eines Zylinders ausgebildet sein, auf der sich der erste Körper im Wesentlichen um den zweiten Körper rotierend bewegt.

Unter einer Spurrichtung ist vorliegend die Richtung zu verstehen, in welcher die Antriebselemente aneinandergereiht werden, um die Spurebene bzw. die Magnetspur zu bilden. Damit entspricht die Spurrichtung der Richtung, in die sich der erste Körper zu dem zweiten Körper bewegt. Bei einem linearen Antrieb ist die Spurrichtung im Wesentlichen geradlinig ausgebildet, während bei einem rotierenden Antrieb die Spurrichtung kreisförmig ausgebildet sein kann, beispielsweise als um die als Mantelfläche ausgebildete Spurebene herum verlaufend.

Unter einer Anordnung ist vorliegend im Wesentlichen die Positionierung der Antriebselemente zu einer Magnetspur zu verstehen. Die Antriebselemente werden entlang der Spurrichtung zu einer Spurebene, bevorzugt parallel und besonders bevorzugt äquidistant zueinander angeordnet, so dass durch die magnetische Wechselwirkung der Antriebselemente mit Elementen des ersten Körpers dieser entlang der Magnetspur bewegt wird. Die Anordnung kann einen Versatz der Antriebselemente zueinander aufweisen, wodurch Codierbereiche der Maßverkörperung seitlich an den Antriebselementen ausgebildet werden.

Unter einer Maßverkörperung sind vorliegend die Komponenten des Absolutwertgebers zu verstehen, die es erlauben, die genaue Position oder den Wert eines gemessenen Parameters zu kodieren. In einem linearen Absolutwertgeber wird die Position entlang einer geraden Linie gemessen. Die Maßverkörperung hat die Funktion eines Lineals oder eines Messbands, das mit Markierungen oder Codes versehen ist, die die Position eindeutig identifizieren. In einem rotierenden Absolutwertgeber wird die Winkelposition gemessen. Die Maßverkörperung kann ein kreisförmiger Codierstreifen oder ein Ring sein, der auf dem Drehpunkt des Gebers angebracht ist und Absolutwerte für verschiedene Positionen aufweist. Vorliegend wird die Maßverkörperung durch die Anordnung der Antriebselemente gebildet. Je nach Anordnung und Ausgestaltung der Antriebselemente, entstehen Codierbereiche am Rand oder im Bereich des Antriebselements. Die Codierbereiche sind somit Teil der Magnetspur und die Gesamtheit der Codierbereiche kann eine oder mehrere Maßverkörperungen ausbilden. Es kann beispielsweise eine Maßverkörperung am Rand und eine weitere in einem mittleren Bereich der Magnetspur durch die Codierbereiche ausgebildet sein, insbesondere wenn die Antriebselemente teilweise als mehrteilige Antriebselemente ausgebildet sind.

Der Grundgedanke der Erfindung ist, dass entlang der Spurrichtung eine Art von Streifen, z.B. als ein Randstreifen auf der Magnetspur ausgebildet ist, welcher wechselnde Feldstärken aufweist, so dass der Streifen als eine Maßverkörperung benutzt werden kann, ohne dass es einer weiteren Maßverkörperung bedarf. Die wechselnden Feldstärken Bereiche des Streifens resultieren aus den Codierbereichen, die entlang der Magnetspur verteilt angeordnet sind.

Der Begriff eines Codierbereichs ist abstrakt zu verstehen, insbesondere losgelöst von der Geometrie eines Antriebselementes. Eine mögliche Auslegung des Begriffs *"Codierbereich"* ist die eines Bereiches, der eine binäre Information ausgibt, wenn er ausgelesen wird. Eine solche Information kann dadurch gegeben sein, dass die gemessene Feldstärke des Codierbereichs sich oberhalb oder unterhalb einer vorgegebenen Schwelle befindet. Ein Codierbereich kann durch einen Versatz, insbesondere quer zur Spurrichtung, ausgebildet sein und/oder durch eine unterschiedliche Länge und/oder durch einen beliebigen Bereich des Antriebselements und/oder durch eine Veränderung, z.B. eine Beschichtung und/oder Materialbearbeitung des Antriebselements, in einem Bereich des Antriebselementes, insbesondere in einem Randbereich des Antriebselementes, so dass sich die Feldstärke in diesem modifizierten Bereich von der Feldstärke im übrigen Bereich des Antriebselements unterscheidet.

In einer Ausführungsform sind die Antriebselemente zu den anderen Antriebselementen in der Spurebene quer, bzw. senkrecht zu der Spurrichtung, insbesondere parallel zueinander, teilweise um einen jeweiligen Versatz zueinander angeordnet, d.h. verschoben, bzw. versetzt zueinander angeordnet, und zwar in Bezug auf eine virtuelle Referenzposition, d.h. in Bezug auf eine gedachte Linie, entlang der Spurrichtung. Der jeweilige Versatz bildet den Codierbereich an den jeweiligen Antriebselementen aus. Der jeweilige Versatz kann dabei bevorzugt für alle versetzten bzw. verschobenen Antriebselemente in Bezug auf die Referenzposition gleich groß sein, d.h. versetzte Antriebselemente werden um einen auf eine Referenzposition gleichen Betrag zueinander versetzt angeordnet. Ist der Versatz gleich groß für alle Antriebselemente, so sind die aus dem Versatz resultierenden Codierbereiche gleich groß.

Ein Antriebselement kann bezüglich einer Referenzposition so zu einem beispielsweise benachbarten Antriebselement versetzt sein, dass der Codierbereich durch den Bereich unmittelbar neben dem Rand oder dem Endabschnitt des Antriebselementes gebildet ist. Dies entspricht dann einem Bereich, im dem sich im Wesentlichen kein Teil oder Abschnitt des Antriebselementes befindet. D.h. dieser Codierbereich liegt im Wesentlichen außerhalb des Antriebselements. Ein Codierbereich, der außerhalb des Antriebselementes liegt, weist eine geringere Feldstärke auf als ein Codierbereich, der im Bereich des Antriebselements angeordnet ist. Den daraus resultierenden unterschiedlichen Feldstärken zwischen benachbarten Codierbereichen, die z.B. außerhalb eines Antriebselementes liegen und solchen, die am Randabschnitt eines Antriebselementes liegen, lassen sich aufgrund der jeweils unterschiedlichen Feldstärken digitale Werte, d.h. 0 oder 1 zuweisen. Durch die Codierbereiche ist eine Codierung, beispielsweise entlang einem Rand der Magnetspur, als eine Maßverkörperung ausgebildet. Der Versatz kann auch stufenweise so ausgebildet sein, dass sich den resultierenden Feldstärken benachbarter Codierbereiche mehr als nur zwei digitale Werten wie 0 oder 1, d.h. -1 0 1 oder 0 1 2 zuweisen lassen.

Ein Codierbereich wirkt somit wie ein Codierelement einer Maßverkörperung. Ein Antriebselement kann mehrere Codierbereiche aufweisen. Ein Codierbereich kann dem mittleren Bereich eines beispielsweise rechteckförmig ausgebildeten Antriebselementes entsprechen, und/oder dem Randbereich, bzw. einem Endabschnitt des Antriebselementes.

Die daraus resultierenden unterschiedlichen Codierbereiche sind durch deren magnetische Feldstärke unterscheidbar. Die Codierbereiche sind so unterscheidbar, dass ihnen ein digitaler Wert 0 oder 1 eindeutig zugeordnet werden kann, wenn ein Sensorelement die Feldstärke des Codierbereichs misst. Bei einem zweiteilig oder mehrteilig ausgebildeten Antriebselement, entstehen Codierbereiche in den Bereichen zwischen den jeweiligen Teilen des Antriebselements. Ein zwei- oder mehrteiliges Antriebselement kann durch mehrere einzelne, d.h. nicht zusammenhängende Elemente ausgebildet sein und/oder durch ein einzelnes zusammenhängendes Element, welches zwei- oder mehrere Bereiche unterschiedlicher Feldstärke aufweist. Handelt es sich um einzelne, d.h. nicht zusammenhängende Elemente, ist in den Bereichen zwischen den Elementen der Magnetfluss, bzw. die Feldstärke geringer als in den übrigen, ungeteilten, d.h. den zusammenhängenden Bereichen des Antriebselementes. Ein Codierbereich kann grundsätzlich durch einen beliebigen Bereich eines Antriebselementes ausgebildet sein, solange sich der Magnetfluss bzw. die Feldstärke des Bereichs von dem eines anderen Bereichs des Antriebselements unterscheiden lässt. Z.B. kann der Randbereich, d.h. der Bereich, der im Wesentlichen außerhalb des Endabschnitts eines Antriebselementes liegt, einen ersten Codierbereich mit einer geringeren Feldstärke ausbilden und ein zweiter Codierbereich kann durch die Mitte desselben Antriebselementes ausgebildet sein.

In einer besonders bevorzugten Ausführungsform des magnetischen Antriebs weisen die Antriebselemente in der Spurebene der Magnetspur, quer zu der Spurrichtung, teilweise eine jeweilige Länge auf, so dass die jeweilige Länge den Codierbereich an den jeweiligen Antriebselementen der Magnetspur bildet.

In dieser Ausführungsform ist ein Codierbereich der Antriebselemente dadurch ausgebildet, dass die Antriebselemente zumindest teilweise kürzer oder länger als weitere Antriebselemente der Magnetspur sind. Somit kann aus den unterschiedlichen Längen der Antriebselemente, beispielsweise bei rechteckförmigen Antriebselementen, lediglich an einem Rand der Magnetspur eine Maßverkörperung ausgebildet sein. Der dazu gegenüberliegende Rand der Magnetspur kann vorteilhaft als eine inkrementale Maßverkörperung benutzt werden. Alternativ dazu kann durch die unterschiedlichen Längen an zwei Seiten der Magnetspur eine Maßverkörperung ausgebildet sein.

In einer besonders bevorzugten Ausführungsform des magnetischen Antriebs sind die Antriebselemente in der Spurebene der Magnetspur teilweise mehrteilig ausgebildet und die jeweiligen Teile sind quer zu der Spurrichtung um einen jeweiligen Versatz zueinander angeordnet, so dass die jeweiligen Versätze der jeweiligen Teile, die jeweiligen Codierbereiche zwischen den jeweiligen Antriebselementen bilden.

Ferner können die Antriebselemente so zueinander in der Magnetspur angeordnet sein, dass durch die Codierbereiche mehrere Maßverkörperungen in der Magnetspur ausgebildet sind.

In einer Ausführungsform ist die mehrteilige Ausbildung eines Antriebselementes in zumindest einen ersten und zweiten Teil dadurch gekennzeichnet, dass das Magnetfeld des Antriebselements im ersten Teil modifiziert, d.h. verändert ist und sich von dem Magnetfeld des zweiten Teils des Antriebselementes unterscheidet, so dass das Antriebselement durch die Veränderung des Magnetfelds als solches zweiteilig ausgebildet ist.

Da die jeweiligen Teile der Antriebselemente zueinander versetzt bzw. einen Abstand zueinander aufweisen, ist in den Bereichen zwischen den Teilen die Feldstärke geringer als in den übrigen Bereichen. Somit sind die Bereiche zwischen den Teilen Codierbereiche und von den anderen Codierbereichen digital unterscheidbar, d.h. so dass einem Codierbereich eindeutig der Wert 1 für eine hohe Feldstärke oder der Wert 0 für eine dazu messbar geringere Feldstärke zugeordnet werden kann. In dieser Ausführungsform können sich insbesondere bei rechteckförmigen Antriebselementen mehrere Maßverkörperungen durch die Abstände zwischen den Teilen eines Antriebselementes innerhalb der Magnetspur vorteilhaft ausbilden. Dadurch kann die Genauigkeit der Positionsbestimmung erhöht werden.

In einer besonders bevorzugten Ausführungsform des magnetischen Antriebs sind die Antriebselemente in der Spurebene der Magnetspur teilweise zweiteilig ausgebildet und der erste Teil ist zu dem zweiten Teil quer zu der Spurrichtung um einen Versatz angeordnet, so dass der durch den Versatz gebildete Bereich den Codierbereich zwischen den jeweiligen Antriebselementen bildet. Ferner können die Antriebselemente so zueinander in der Magnetspur angeordnet sein, dass durch die Codierbereiche zwei komplementäre Maßverkörperungen in der Magnetspur ausgebildet sind.

In dieser besonders bevorzugten Ausführungsform wird insbesondere bei rechteckförmigen Antriebselementen eine erste und dazu zweite komplementäre Maßverkörperung ausgebildet, die innerhalb der Magnetspur verlaufen und nicht an deren Rand. Dies hat den Vorteil, dass die Genauigkeit der Absolutposition durch das kombinierte Auswerten beider Positionsdaten höher wird als bei nur einer Maßverkörperung. Ferner können die Ränder der Magnetspur als zusätzliche inkrementale Maßverkörperungen benutzt werden.

In einer bevorzugten Ausführungsform des magnetischen Antriebs weist der erste Körper mindestens N Sensorelemente auf, deren Anordnung in der Spurebene entlang der Spurrichtung an die Anordnung der Antriebselemente angeglichen ist, so dass in Positionen des ersten Körpers jeweils ein Sensorelement der N Sensorelemente über dem Codierbereich eines jeweiligen Antriebselementes der Antriebselemente angeordnet ist.

Unter angeglichen ist vorliegend zu verstehen, dass die jeweiligen Sensorelemente der N Sensorelemente in Positionen der Vielzahl von Positionen des ersten Körpers nicht exakt über dem Codierbereich eines jeweiligen Antriebselementes angeordnet sein müssen, d.h. nicht äquidistant zueinander sein müssen, sondern einen von Sensorelement zu Sensorelement veränderten Abstand aufweisen können.

In einer besonders bevorzugten Ausführungsform des magnetischen Antriebs weist der erste Körper mindestens 2N Sensorelemente auf, deren Anordnung in der Spurebene entlang der Spurrichtung der Anordnung der Antriebselemente angeglichen ist, so dass in Positionen des ersten Körpers jeweils zwei Sensorelemente der 2N Sensorelemente über dem Codierbereich eines jeweiligen Antriebselementes der Antriebselemente angeordnet sind.

In einer besonders bevorzugten Ausführungsform des magnetischen Antriebs weist der erste Körper mindestens 2N Sensorelemente auf, deren Anordnung in der Spurebene entlang der Spurrichtung der Anordnung der Antriebselemente angeglichen ist, so dass in Positionen des ersten Körpers jeweils ein Sensorelement der 2N Sensorelemente über jeweils einem der Codierbereiche eines jeweiligen Antriebselementes der Antriebselemente angeordnet ist.

Dadurch kann die Genauigkeit der Positionsbestimmung verbessert werden, da die doppelte Anzahl von Positionsdaten beispielsweise eine Mittelwertbildung erlaubt.

In einer besonders bevorzugten Ausführungsform des magnetischen Antriebs weist der erste Körper mindestens 4N Sensorelemente auf, deren Anordnung in der Spurebene entlang der Spurrichtung der Anordnung der Antriebselemente angeglichen ist, so dass in Positionen des ersten Körpers jeweils zwei Sensorelemente der 4N Sensorelemente über jeweils einem der Codierbereiche eines jeweiligen Antriebselementes der Antriebselemente angeordnet sind.

Dadurch kann die Genauigkeit der Positionsbestimmung verbessert werden. Zum einen dadurch, dass die doppelte Anzahl von Positionsdaten beispielsweise eine Mittelwertbildung erlaubt. Zum anderen dadurch, dass Positionsdaten unterschiedlicher Maßverkörperungen zur Positionsbestimmung benutzt werden können, insbesondere die Positionsdaten zueinander komplementärer Maßverkörperungen.

In einer bevorzugten Ausführungsform des magnetischen Antriebs bilden jeweils N aufeinanderfolgende Codierbereiche ein jeweiliges Codewort der Maßverkörperung und jedes Codewort entlang der Magnetspur ist einmalig und stellt eine Absolutposition dar.

In diesem Zusammenhang definiert bezüglich einer Binärcodierung R = 2 die binären Zustände 0 oder 1. Die maximale Größe eines räumlichen Kodierungsversatzes ist von dem Abstand zweier unmittelbar benachbarter Relativpositionen beschränkt. Eine Anzahl N von Codeelementen kann von den Sensorelementen als Codewort gleichzeitig erfasst werden, so dass R^{N} verschiedene Positionsinformationen durch den Absolutwertgeber für die Bestimmung der Absolutposition ausgewertet werden können. N kann beispielsweise einen Wert, d.h. eine Bittiefe von 7, 8, 10 oder 11 Zeichen aufweisen.

In einer bevorzugten Ausführungsform des magnetischen Antriebs ist die Gesamtheit der durch die Codierbereiche der Maßverkörperung codierten Zeichenfolge als ein Pseudo-Random-Binary-Sequence-Code (PRBS-Code) ausgebildet.

In einer besonders bevorzugten Ausführungsform des magnetischen Antriebs sind die Antriebselemente als Permanentmagnete und/oder als Magnetspulen ausgebildet.

In einer besonders bevorzugten Ausführungsform des magnetischen Antriebs ist der Antrieb als Linearantrieb ausgebildet und umfasst eine Auswerteeinheit, die eingerichtet ist, Sensordaten der Sensorelemente auszulesen und zu verarbeiten, um aus den Sensordaten die Absolutposition des ersten Körpers zu berechnen, wobei die magnetischen Antriebselemente des zweiten Körpers mit magnetischen Antriebselementen des ersten Körpers zum Antrieb des ersten Körpers magnetisch wechselwirken.

Ferner betrifft die Erfindung ein Verfahren zur Herstellung eines magnetischen Antriebs, aufweisend einen magnetischen Absolutwertgeber, zur Bestimmung einer Absolutposition eines ersten Körpers des magnetischen Antriebs, der sich verstellbar zu einem zweiten Körper des magnetischen Antriebs um eine Position zu diesem verschiebt, wobei der erste Körper Sensorelemente aufweist, um aus einer Maßverkörperung die Absolutposition zu ermitteln und wobei der zweite Körper magnetische Antriebselemente aufweist. Das Verfahren umfasst die folgenden Schritte:
- Bereitstellen von Antriebselementen, die teilweise Codierbereiche aufweisen;
- Anordnung der Antriebselemente zu einer Magnetspur, indem die Antriebselemente, insbesondere äquidistant, zueinander entlang einer Spurrichtung positioniert werden, so dass durch die Codierbereiche eine Maßverkörperung der Magnetspur ausgebildet wird;
- Bereitstellen magnetischer Codierbereiche indem zumindest ein Teil der Antriebselemente zumindest abschnittsweise modifiziert wird, indem die Codierbereiche durch eine Beschichtung und/oder durch eine Ablation des Antriebselementes ausgebildet werden.

In einer besonders bevorzugten Ausführungsform des Verfahrens zur Herstellung eines magnetischen Antriebs weist das Verfahren zusätzlich die folgenden Schritte auf:
- Bereitstellen weiterer Codierbereiche (12), indem
- die Antriebselemente (9) um einen jeweiligen Versatz (11) zu einem der weiteren Antriebselemente (9) angeordnet werden, und/oder indem
- die jeweiligen Antriebselemente (9) um eine jeweilige Länge (14) zu einem der weiteren Antriebselemente (9) verkürzt werden

In einer weiter bevorzugten Ausführungsform des Verfahrens zur Herstellung eines magnetischen Antriebs weist das Verfahren zusätzlich die folgenden Schritte auf:
- Anordnen der Antriebselemente in der Spurebene der Magnetspur, wobei die Antriebselemente mehrteilig ausgebildet sind und die jeweiligen Teile quer zu der Spurrichtung einen Versatz aufweisen, so dass die Versätze der jeweiligen Teile jeweilige Codierbereiche der Antriebselemente ausbilden und die Antriebselemente so zueinander in der Magnetspur angeordnet sind, dass durch die Codierbereiche mehrere Maßverkörperungen in der Magnetspur ausgebildet sind.

Erfindungsgemäß werden unterschiedliche Magnetfeldstärken eines Antriebselements, insbesondere im Randbereich eines jeweiligen Antriebselementes, durch eine Modifikation des Antriebselementes erzielt. Eine Modifikation bewirkt eine veränderte Feldstärke im Vergleich zur übrigen Feldstärke des Antriebselementes in dem Bereich, in dem die Modifikation durchgeführt wird. Erfindungsgemäß wird eine Modifikation durch Ablation und/oder durch Aufbringen einer Schicht insbesondere einer ferromagnetischen Schicht, als eine Beschichtung, insbesondere lokal, erzielt .

Die Ablation kann durch einen Laser erfolgen. Dabei kann ein Laser Teile der Antriebselemente entfernen bzw. abtragen, so dass sich die Feldstärke in diesen Bereichen von der Feldstärke in den übrigen Bereichen des Antriebselementes unterscheidet. Die Ablation kann auch durch mechanische Bearbeitung z.B. mittels einer Fräse erfolgen.

Das Auftragen einer Schicht kann insbesondere durch ein 3D-Druck Verfahren erfolgen. Dabei können magnetische Materialien auf das Antriebselement lokal gedruckt werden. Der 3D-Drucker kann dabei mit speziell hergestellten Schnüren aus magnetischem Mikro-Granulat betrieben werden, das von einem Kunststoff-Bindematerial zusammengehalten wird. Im Drucker wird das Material erhitzt und mit einer Düse Punkt für Punkt auf dem Bereich eines Antriebselementes aufgebracht. Es entsteht eine magnetische Schicht, die ungefähr 90% magnetisches Material und 10% Kunststoff aufweist. Weil das Granulat in nicht magnetisiertem Zustand gedruckt wird, muss die fertige Schicht einem starken äußeren Magnetfeld ausgesetzt werden, um permanentmagnetisch zu werden. Alternativ kann auch das Antriebselement als solches im 3D-Druck Verfahren hergestellt werden. Dabei kann zur Ausbildung des Codierbereichs nur ein Teil des unmagnetischen Materials magnetisiert werden oder die Magnetisierung erfolgt mit unterschiedlich starken magnetischen Feldern, so dass sich Bereiche des Antriebselementes als Codierbereiche mit unterschiedlichen Feldstärken ausbilden.

Weitere bevorzugte Ausgestaltungen des erfindungsgemäßen Antriebs mit magnetischer Absolutcodierung und des Verfahrens zur Herstellung eines magnetischen Antriebs mit magnetischer Absolutcodierung ergeben sich aus der nachfolgenden Beschreibung der Ausführungsbeispiele in Zusammenhang mit den Figuren und deren Beschreibung. Gleiche Bauteile werden im Wesentlichen durch gleiche Bezugszeichen gekennzeichnet, falls dies nicht anders beschrieben wird oder sich nicht anders aus dem Kontext ergibt.
Fig. 1 zeigt eine schematische Darstellung einer Ausführungsform des erfindungsgemäßen magnetischen Antriebs mit einem ersten und zweiten Körper, wobei sich der erste Körper entlang einer Magnetspur des zweiten Körpers bewegt.
Fig. 2a zeigt eine schematische Darstellung einer Ausführungsform der Magnetspur des erfindungsgemäßen magnetischen Antriebs mit Sensorelementen zur Abtastung der Codierbereiche.
Fig. 2b zeigt eine schematische Ansicht eines Ausschnitts der Magnetspur mit vier Antriebselementen, die in unterschiedlichen Anordnungen dargestellt sind.
Fig. 3 zeigt eine schematische Darstellung einer Ausführungsform der Magnetspur des erfindungsgemäßen magnetischen Antriebs mit jeweils zwei Sensorelementen zur Abtastung der Codierbereiche.
Fig. 4 zeigt eine schematische Darstellung einer Ausführungsform der Magnetspur des erfindungsgemäßen magnetischen Antriebs mit zwei Sensorelementen zur Abtastung der Codierbereiche und zwei zueinander benachbarter Maßverkörperungen.
Fig. 5 zeigt eine schematische Darstellung einer Ausführungsform der Magnetspur des erfindungsgemäßen magnetischen Antriebs, wobei sich ein Versatz der Antriebselemente dadurch ergibt, dass die Antriebselemente teilweise unterschiedliche Längen aufweisen.
Fig. 6 zeigt eine schematische Darstellung einer Ausführungsform der Magnetspur des erfindungsgemäßen magnetischen Antriebs, wobei die Codierbereiche durch zweiteilig ausgeführte Antriebselemente innerhalb der Magnetspur ausgebildet sind.
Fig. 7 zeigt eine schematische Darstellung einer Ausführungsform der Magnetspur des erfindungsgemäßen magnetischen Antriebs, wobei die Codierbereiche teilweise durch zweiteilig ausgeführte Antriebselemente innerhalb der Magnetspur ausgebildet sind und teilweise durch Antriebselemente, die eine unterschiedliche Länge aufweisen.
Fig. 8 zeigt eine schematische Darstellung einer Ausführungsform der Magnetspur des erfindungsgemäßen magnetischen Antriebs, wobei die Codierbereiche teilweise durch zweiteilig ausgeführte Antriebselemente innerhalb der Magnetspur ausgebildet sind und teilweise zusätzlich zueinander versetzt angeordnet sind.
Fig. 9 zeigt eine schematische Darstellung einer Ausführungsform der Magnetspur, wobei die Codierbereiche teilweise durch eine jeweilige Modifikation der Antriebselemente an einem Rand der Magnetspur hervorgerufen sind.

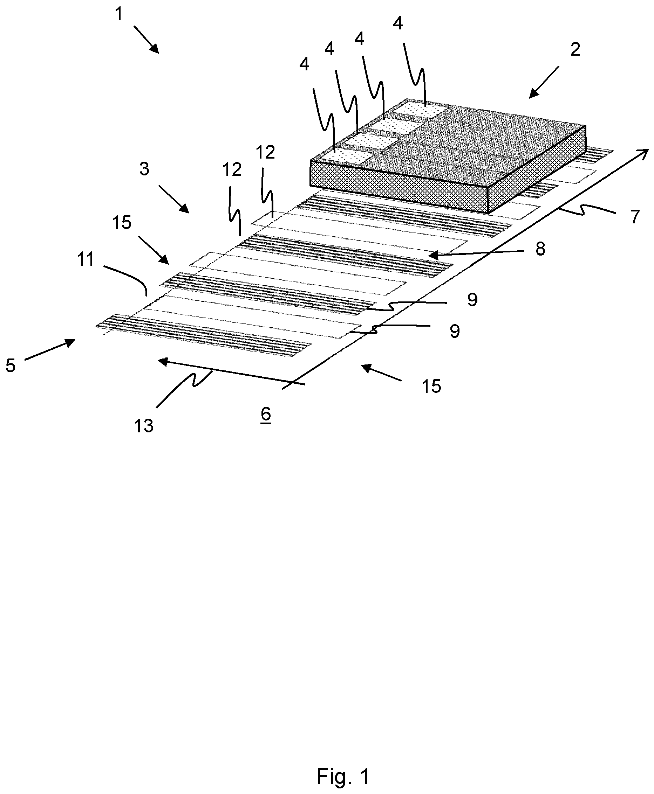

In Fig. 1 ist eine schematische Darstellung einer Ausführungsform des erfindungsgemäßen magnetischen Antriebs 1 mit einem ersten Körper 2 und zweiten Körper 3 gezeigt, wobei sich der erste Körper 2 entlang einer Magnetspur 8 des zweiten Körpers 3 in Spurrichtung 7 bewegt. Die Magnetspur 8 ist in der Spurebene 6 ausgebildet. Die Magnetspur 8 weist mehrere, parallel zueinander angeordnete Antriebselemente 9 auf. Die Antriebselemente sind in einer Richtung 13 quer zur Spurrichtung 7 abschnittsweise verschoben, so dass sich ein Versatz 11 an den jeweiligen Rändern 15 der Magnetspur 8 ausbildet. Durch den Versatz 11 ergeben sich Codierbereiche 12 an den beiden Rändern 15 der Magnetspur 8. Die Codierbereiche 12 bilden eine jeweilige Maßverkörperung 5 an einem jeweiligen Rand 15 der Magnetspur 8 aus. Der Rand 15 erscheint durch den Versatz 11 der Antriebselemente 9 an den Rändern 15 ausgefranst. Die sich durch den Versatz 11 ergebenden Codierbereiche 12 sind dadurch gekennzeichnet, dass sie durch einen Endabschnitt oder einen Rand eines rechteckigen Antriebselementes 9 ausgebildet sind oder dadurch, dass sich in dem Codierbereich 12 gerade kein Antriebselement 9 mehr befindet, d.h. sich der Codierbereich 12 im Wesentlichen außerhalb des Antriebselementes 9 befindet. Die Codierbereiche 12 entsprechen deshalb Bereichen, die sich durch eine hohe Feldstärke und eine dazu geringere Feldstärke unterscheiden, so dass bei der Messung der Feldstärke in einem Codierbereich 12 durch ein Sensorelement 4 des ersten Körpers 2 zumindest eine erste oder eine zweite Feldstärke ergibt und diese einem digitalen Wert eindeutig zugeordnet werden kann. Dadurch wirken die Codierbereiche 12 als Codeelemente der Maßverkörperung 5 des Antriebs 1. In Fig. 1 umfasst der erste Körper 2 insgesamt vier Sensorelemente 4, welche zum Messen der Feldstärke in einem jeweiligen Codierbereich 12 ausgebildet sind, wenn sich der Körper 2 bewegt, oder wenn der Körper 2 stationär ist. Die Sensorelemente 4 sind in Fig. 1 so zueinander beabstandet, dass ein jeweiliges Sensorelement 4 über einem jeweiligen Codierbereich 12 eines Antriebselementes 9 positioniert sein kann, um dessen Feldstärke zu messen. Der Versatz 11 erfolgt in der Ebene der Spurrichtung 7 in einer im Wesentlichen senkrechten Richtung, bzw. in einer Richtung quer zu der Spurrichtung 7.

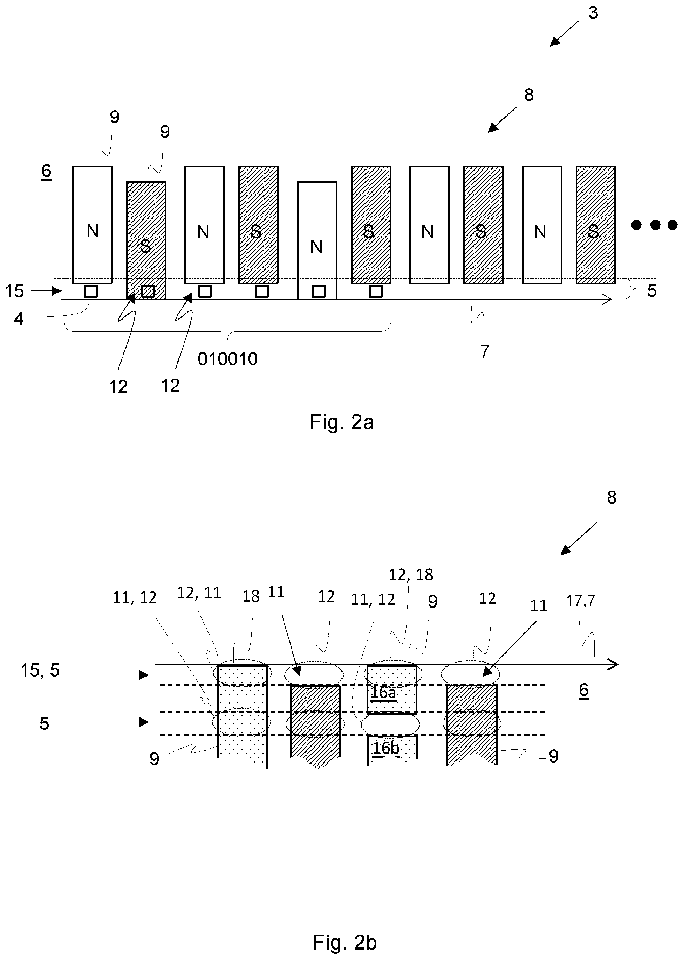

In Fig. 2a ist eine schematische Darstellung einer Ausführungsform der Magnetspur 8 des erfindungsgemäßen magnetischen Antriebs 1 mit sechs Sensorelementen 4 zur Abtastung der Codierbereiche 12 dargestellt. Die Ausführungsform der Magnetspur 8 entspricht dabei einer Draufsicht der in Fig. 1 dargestellten Magnetspur 8. An einem Randbereich 15 der Magnetspur 8 sind die sechs Sensorelemente 4 des ersten Körpers 2 (nicht dargestellt) so positioniert gezeigt, dass die Sensorelemente 4 über einen jeweiligen Codierbereich 12 der Antriebselemente 9 angeordnet sind. Die Codierbereiche 12 resultieren aus dem parallelen Versatz 11 der Antriebselemente zueinander und quer zur Spurrichtung 7. Die Codierung erfolgt dadurch, dass nur bestimmte Antriebselemente 9 zu einer virtuellen Referenzposition, welche durch die in Fig. 2a angedeutete Spurrichtung 7 gegeben sein kann, tatsächlich versetzt werden und die sich dadurch am Rand 15 der Magnetspur 8 ausbildende Feldstärkemodulation der gewünschten Codierung entspricht. Es kann festgelegt werden, dass ein Codierbereich 12 mit einer geringen Feldstärke wie in Fig. 2a angedeutet, einem digitalen Wert 0 entspricht und ein Codierbereich mit einer dazu höheren Feldstärke einem digitalen Wert 1 entspricht. Dadurch ergibt sich das in Fig. 2 beim Auslesen der über den Codierbereichen 12 angeordneten sechs Sensorelementen 4 dargestellte bit-Muster 010010, welches einer Absolutposition der Maßverkörperung 5 entspricht. Die Polarisation bzw. die "N", "S" Richtung der Magnetfelder der Antriebselemente 9 ist dabei aus der Zeichenebene hinaus bzw. in die Zeichenebene hinein dargestellt, so dass für ein jeweiliges Antriebselement 9 nur die "S" oder "N" Polarisation in dieser Darstellung sichtbar ist.

In Fig. 2b ist eine schematische Ansicht eines Ausschnitts der Magnetspur 8 mit vier Antriebselementen 9 gezeigt. Die Antriebselemente 9 sind in vier unterschiedlichen Anordnungen in der Spurebene 6 dargestellt. Durch das Versetzen 11 ergeben sich insgesamt zwei Maßverkörperungen 5, die jeweils durch gestrichelte Linien angedeutet sind.

Das linke, erste Antriebselement 9 weist keinen Versatz 11 auf. Die von links zweiten und vierten Antriebselemente 9 sind gegen die Referenzspur 17, die mit der Spurrichtung 7 übereinstimmt, um den Versatz 11 zu dieser versetzt angeordnet. Durch den Versatz 11 bilden sich außerhalb der Antriebselemente 9 an dem Rand 15 der Magnetspur 8 zwei Codierbereiche 12 aus, welche jeweils durch gestrichelte Kreise angedeutet sind. Dadurch wirken die Randbereiche oder Endabschnitte 18 der nicht zur Referenzposition 17 versetzten Antriebselemente 9, d.h. das von links erste und dritte Antriebselement 9, auch als Codierbereich 12. Mit anderen Worten, der Versatz 11 eines Antriebselementes 9 führt zur Ausbildung eines Codierbereichs 12 des Antriebselementes 9 und sowie zur Ausbildung von Codierbereichen 12 weiterer Antriebselemente, so dass sich eine Maßverkörperung 5 aus der Anzahl der ausgebildeten Codierbereiche 12 ergibt. Beispielsweise ist das in Fig. 2b von links dritte Antriebselement in einen ersten 16a und zweiten 16b Teil aufgeteilt. Die Teile 16a, 16b sind um den Versatz 11 voneinander versetzt, wodurch sich ein Codierbereich 12 zwischen dem ersten 16a und zweiten 16b Teil ausbildet. Dieser definiert die weiteren in Fig. 2b eingezeichneten Codierbereiche 12 der von links aus ersten, zweiten und vierten Antriebselemente 9, so dass aus dem durch den Versatz 11 entstandenen Codierbereich 12 des einen Antriebselementes 9 und den daraus resultierenden Codierbereichen 12 der weiteren Antriebselemente 9 eine Maßverkörperung 5 resultiert, die im mittleren Bereich der Magnetspur 8 verläuft.

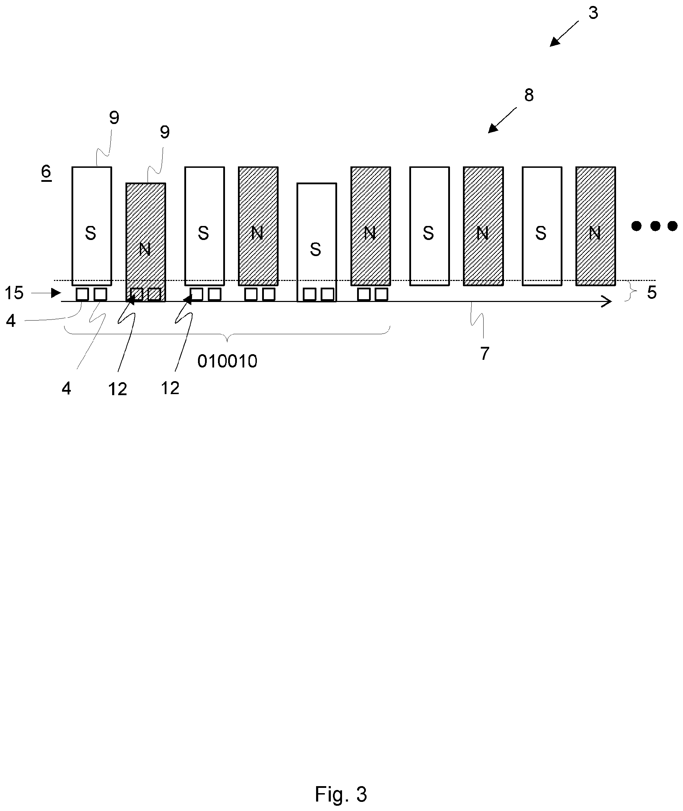

In Fig. 3 ist eine schematische Darstellung einer Ausführungsform der Magnetspur 8 des erfindungsgemäßen magnetischen Antriebs 1 gezeigt, bei der mit jeweils zwei Sensorelementen 4 die Codierbereiche 12 abgetastet werden. Dadurch kann die Genauigkeit der Positionsbestimmung beispielsweise durch Mittelwertbildung erhöht werden. In diesem Fall umfasst der erste Körper 2 2N Sensorelemente verglichen mit der in Fig. 1 und Fig. 2 gezeigten Ausführungsform des ersten Körpers 2. Zur weiteren Beschreibung wird auf Fig. 2 verwiesen. Die Antriebselemente 9 sind in Spurrichtung 7 bevorzugt äquidistant zueinander beabstandet.

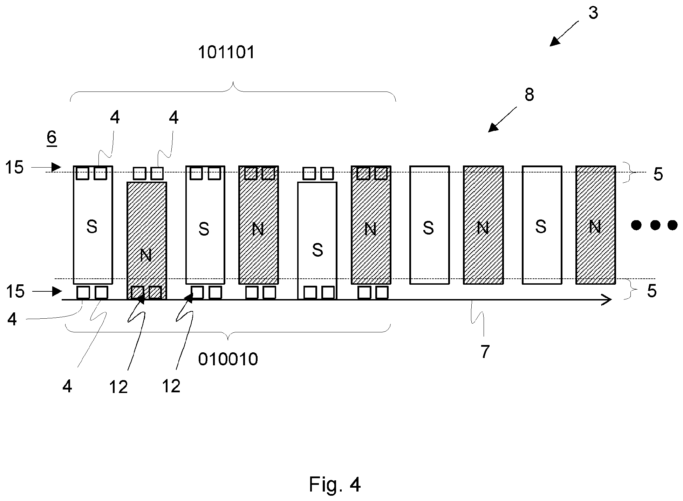

In Fig. 4 ist eine schematische Darstellung einer Ausführungsform der Magnetspur 8 des erfindungsgemäßen magnetischen Antriebs 1 mit je zwei Sensorelementen 4 zur Abtastung der Codierbereiche 12 und zwei zueinander benachbarter Maßverkörperungen 5 schematisch dargestellt. Durch den Versatz 11 in einer Richtung 13 quer zur Spurrichtung 7 sind an den Rändern 15 der Magnetspur 8 zwei zueinander komplementäre Maßverkörperungen 5 ausgebildet. Entsprechend weist der erste Körper 2 vier N Sensorelemente zur Abtastung der durch den Versatz 11 ausgebildeten Codierbereiche 12 an einem jeweilige Rand 15 der Magnetspur 8 auf. Die Abtastung erfolgt somit mit jeweils zwei Sensorelementen 4 pro Maßverkörperung. Durch eine komplementäre Maßverkörperung 5 kann eine Absolutposition genauer bestimmt werden. Dabei können die Sensorelemente beispielsweise als Hall-Sensoren zur Bestimmung der magnetischen Feldstärke eines Codierbereich 12 ausgebildet sein.

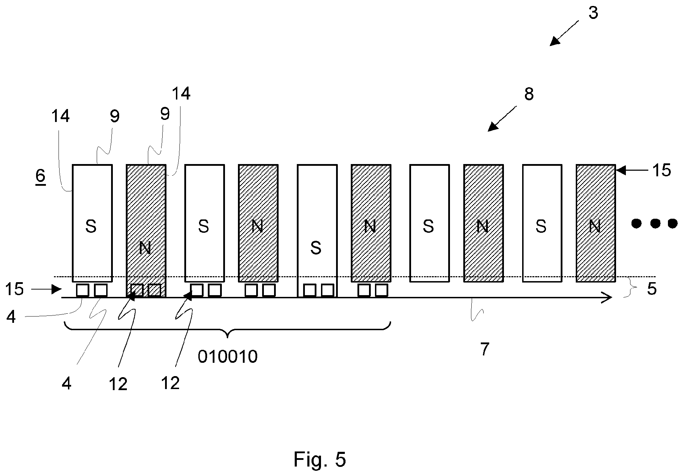

In Fig. 5 ist eine schematische Darstellung einer Ausführungsform der Magnetspur 8 des erfindungsgemäßen magnetischen Antriebs 1 gezeigt, bei der sich ein Versatz 11 der Antriebselemente 9 dadurch ergibt, dass sich die Antriebselemente 9 in ihrer Länge 14 unterscheiden. Durch die unterschiedlichen Längen 14 der Antriebselemente 9 ist ein Rand 15 der Magnetspur 8 bündig abschließend, während der dazu gegenüberliegende Rand 15 "ausgefranst" ist, wodurch die Codierbereiche 12 die Maßverkörperung 5 ausbilden. Die in Fig. 5 eingezeichneten Sensorelemente 4 des ersten Körpers 2 sind über den Codierbereichen 12 positioniert dargestellt und detektieren die angedeutete Bit-Folge 010010. Der bündig abschließende Rand 15 kann in dieser Ausführungsform als eine Inkrementalspur verwendet werden.

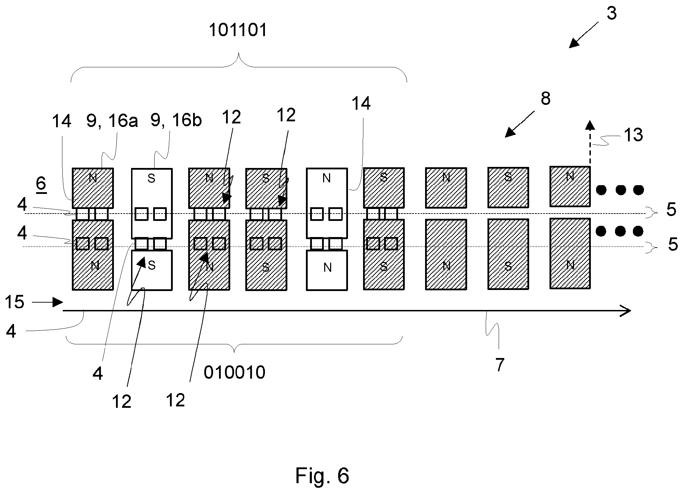

In Fig. 6 ist eine schematische Darstellung einer Ausführungsform der Magnetspur 8 des erfindungsgemäßen magnetischen Antriebs 1 gezeigt, wobei die Codierbereiche 12 durch zweiteilig ausgeführte Antriebselemente 9 innerhalb der Magnetspur 8 ausgebildet sind. Der Versatz 11 ergibt sich in dieser Ausführungsform durch den Abstand zwischen einem ersten 16a und einen zweiten 16b Teil eines Antriebselementes 9. Die jeweiligen Teile 16a, 16b sind dabei quer zu der Spurrichtung 7 versetzt, was durch einen gestrichelten Pfeil 13 in Fig. 6 angedeutet ist. Durch die Abstände zwischen den jeweiligen Teilen 16a, 16b der Antriebselemente 9 bilden sich zwei Maßverkörperungen 5 innerhalb der Magnetspur 8 aus, wenn die Antriebselemente 9 wie in Fig. 6 dargestellt, beispielsweise abschnittsweise alternierend, d.h. abschnittsweise jeweils um 180° zueinander gedreht, aufeinanderfolgend zu einer Magnetspur 8 angeordnet werden. Dies hat den Vorteil, dass durch die Drehung, bzw. die Punktsymmetrie zweier Antriebselemente 9 zueinander, sich eine erste und dazu zweite, komplementäre Maßverkörperung 5 ausbildet. In dieser Ausführungsform lassen sich die bündig abschließenden Ränder 15 der Magnetspur 8 zusätzlich als inkrementale Maßverkörperungen 5 verwenden. Von den in Fig. 6 eingezeichneten 24 Sensorelementen 4 des ersten Körpers 2 sind jeweils 2 Sensorelemente über einem Codierbereich 12 einer jeweiligen Maßverkörperung 5 positioniert dargestellt und detektieren die angedeutete Bit-Folge 010010, bzw. die dazu komplementäre Bit-Folge 101101. Der bündig abschließende Rand 15 kann in dieser Ausführungsform als eine Inkrementalspur verwendet werden.

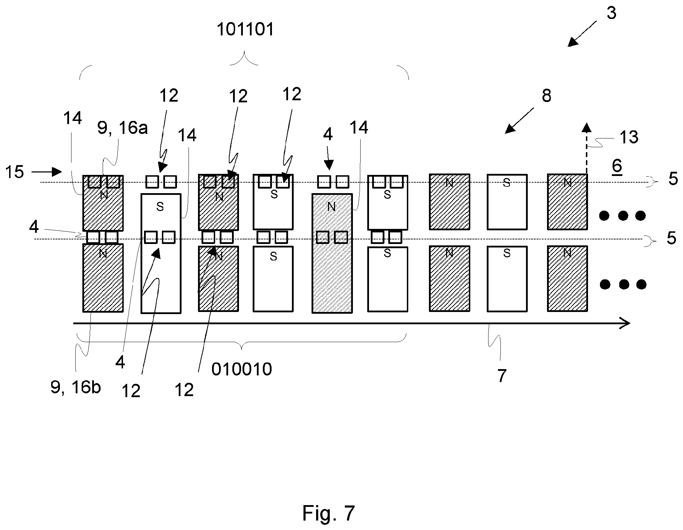

In Fig. 7 ist eine schematische Darstellung einer Ausführungsform der Magnetspur 8 des erfindungsgemäßen magnetischen Antriebs 1 gezeigt, wobei die Codierbereiche 12 teilweise durch zweiteilig ausgeführte Antriebselemente 9 innerhalb der Magnetspur 8 ausgebildet sind und teilweise durch Antriebselemente 9, die eine unterschiedliche Länge 14 aufweisen. Die jeweiligen Teile 16a, 16b sind dabei quer zu der Spurrichtung 7 versetzt, was durch einen gestrichelten Pfeil 13 in Fig. 7 angedeutet ist. In dieser Ausführungsform ergibt sich durch den teilweisen zweiteiligen Aufbau der Antriebselemente 9 mit einem ersten 16a und zweiten 16b Teil im Wesentlichen in der Mitte der Magnetspur 8 eine erste Maßverkörperung 5. Durch die zusätzliche teilweise unterschiedliche Länge 14 der Antriebselemente 9 ergibt sich an einem Rand 15 eine weitere, zu der ersten komplementären Maßverkörperung 5. Der dazu gegenüberliegende, bündig abschließenden Rand 15, kann als eine inkrementale Maßverkörperung benutzt werden. Die über den jeweiligen Codierbereichen 12 positionierten Sensorelemente 4 des ersten Körpers 2 würden demnach die in der Fig. 7 dargestellte erste Bit-Folge 101101 bzw. die dazu komplementäre Bit-Folge 010010 messen.

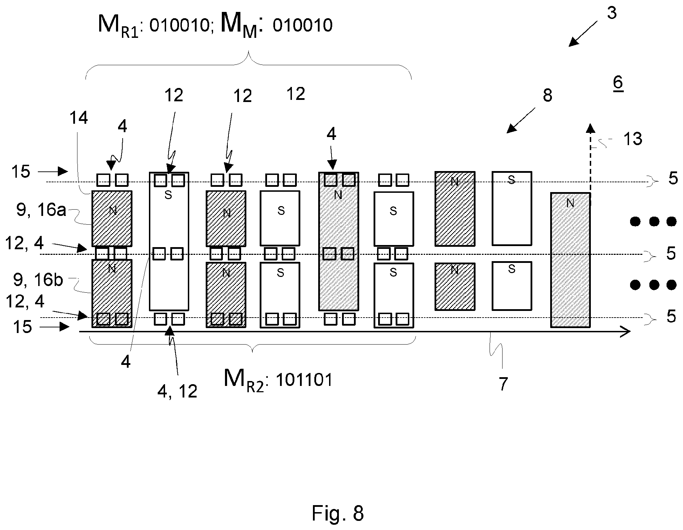

In Fig. 8 ist eine schematische Darstellung einer Ausführungsform der Magnetspur 8 des erfindungsgemäßen magnetischen Antriebs 1 gezeigt, wobei die Codierbereiche 12 teilweise durch zweiteilig 16a, 16b ausgeführte Antriebselemente 9 innerhalb der Magnetspur 8 ausgebildet sind und zusätzlich teilweise zueinander versetzt 11 angeordnet sind. In dieser Ausführungsform entstehen durch die jeweiligen Anordnungen der Antriebselemente 9, d.h. durch den Versatz 11 zwischen einem ersten 16a und zweiten 16b Teil eines Antriebselementes eine erste Maßverkörperung 5, welche im Wesentlichen in der Mitte der Magnetspur 8 verläuft. Zwei weitere Maßverkörperungen 5 ergeben sich durch den teilweisen Versatz 11 der Antriebselemente 9 zueinander an den jeweiligen Rändern 15 der Magnetspur 8. Die Sensorelemente 4 des ersten Körpers 2 sind über den jeweiligen Codierbereichen 12 der jeweiligen Maßverkörperungen 5 angeordnet, so dass sich eine an dem ersten Rand 15 gemessene Bit-Folge von M_{R1} 010010 ergeben würde. Eine an dem dazu gegenüberliegendem Rand 15 gemessene Bit-Folge von M_{R2} 101101 und die folgende Bit-Folge in der mittleren Maßverkörperung 5 M_{M} 010010. Die Bit-Folgen M_{R1} und M_{R2} der jeweiligen Ränder 15 sind komplementäre Bit-Folgen zueinander, so dass die Genauigkeit der Positionsmessung erhöht ist. Der Versatz 11 zwischen den Antriebselementen bzw. zwischen den ersten 16a und zweiten 16b Teilen der Antriebselemente 9 ist jeweils quer zu der Spurrichtung 7 versetzt und durch einen gestrichelten Pfeil 13 in Fig. 8 angedeutet.

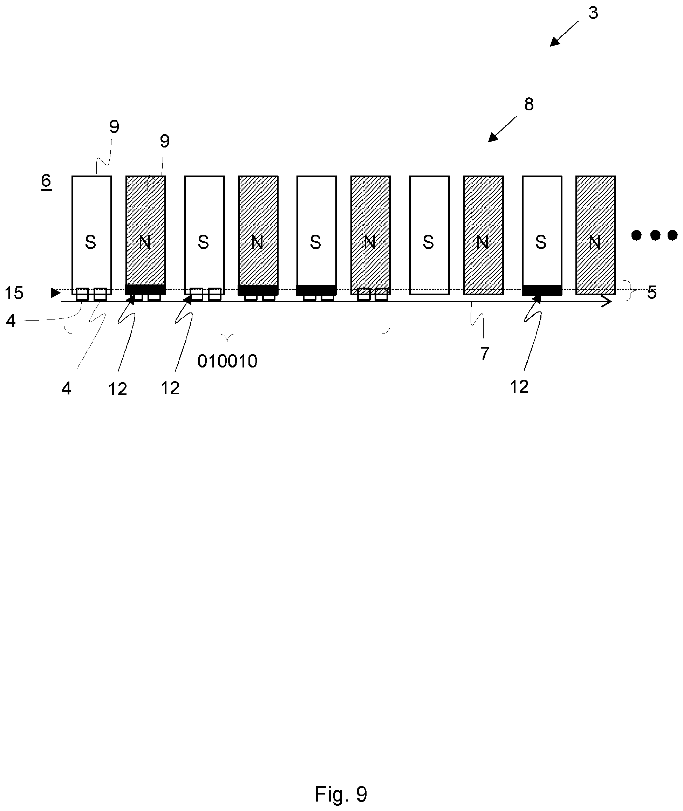

In Fig. 9 ist eine schematische Darstellung einer Ausführungsform der Magnetspur 8 des erfindungsgemäßen magnetischen Antriebs 1 gezeigt, bei der sich die Antriebselemente 9 nicht in ihrer Länge 14 unterscheiden. Die Codierbereiche 12, die die Maßverkörperung 5 ausbilden, werden teilweise durch eine Modifikation der Antriebselemente 9 am Rand 15 erreicht. Eine Modifikation kann durch eine Veränderung, z.B. eine Beschichtung und/oder Materialbearbeitung des Antriebselements 9, in einem Bereich des Antriebselementes 9, insbesondere am Rand 15 des Antriebselementes 9 erreicht werden, so dass sich die Feldstärke in diesem modifizierten Bereich von der Feldstärke im übrigen Bereich des Antriebselements 9 unterscheidet. Dadurch wird eine Maßverkörperung 5 am Rand 15 der Magnetspur ausgebildet. Die in Fig. 5 eingezeichneten Sensorelemente 4 des ersten Körpers 2 sind über den Codierbereichen 12 positioniert dargestellt und detektieren die angedeutete Bit-Folge 010010. Der den Codierbereichen 12 gegenüberliegende Rand der Magnetspur 8 kann in dieser Ausführungsform als eine Inkrementalspur verwendet werden.

### Liste der Bezugszeichen

- 1: Magnetischer Antrieb
- 2: Erster Körper
- 3: Zweiter Körper
- 4: Sensorelemente
- 5: Maßverkörperung
- 6: Spurebene
- 7: Spurrichtung
- 8: Magnetspur
- 9: Antriebselemente
- 10: Abschnitt
- 11: Versatz
- 12: Codierbereich
- 13: Richtung quer zur Spurrichtung
- 14: Länge
- 15: Rand
- 16a: erster Teil eines Antriebselementes
- 16b: zweiter Teil eines Antriebselementes
- 17: Referenzposition
- 18: Endabschnitt eines Antriebselementes

## Patentansprüche

1. Magnetischer Antrieb (1) aufweisend einen Absolutwertgeber, zur Bestimmung einer Absolutposition eines ersten Körpers (2) des magnetischen Antriebs (1), der sich verstellbar zu einem zweiten Körper (3) des magnetischen Antriebs (1) um eine Position, insbesondere eine Längenposition, zu diesem verschiebt, wobei der erste Körper (2) Sensorelemente (4) aufweist, um aus einer Maßverkörperung (5) des Absolutwertgebers die Absolutposition zu ermitteln und wobei der zweite Körper (3) in einer Spurebene (6) entlang einer Spurrichtung (7), insbesondere äquidistant, voneinander beabstandete zu einer Magnetspur (8) angeordnete magnetische Antriebselemente (9) aufweist, wobei die Antriebselemente (9) teilweise Codierbereiche (12) aufweisen und die Maßverkörperung (5) durch die Codierbereiche (12) ausgebildet ist, **dadurch gekennzeichnet, dass** die Codierbereiche (12) durch eine Beschichtung und/oder Ablation des jeweiligen Antriebselementes (9) ausgebildet sind.

2. Magnetischer Antrieb nach Anspruch 1, **dadurch gekennzeichnet, dass** die Antriebselemente (9) in der Spurebene (6) der Magnetspur (8), quer (13) zu der Spurrichtung (7), insbesondere parallel zueinander, teilweise um einen jeweiligen Versatz (11) zueinander angeordnet sind, so dass der jeweilige Versatz (11) den Codierbereich (12) an den jeweiligen Antriebselementen (9) bildet.

3. Magnetischer Antrieb nach Anspruch 1 oder 2, **dadurch gekennzeichnet, dass** die Antriebselemente (9) in der Spurebene (6) der Magnetspur (8), quer (13) zu der Spurrichtung (7), teilweise eine jeweilige Länge (14) aufweisen, so dass die jeweilige Länge (14) den Codierbereich (12) an den jeweiligen Antriebselementen (9) bildet.

4. Magnetischer Antrieb nach einem der Ansprüche 1 bis 3, **dadurch gekennzeichnet, dass** die Antriebselemente (9) in der Spurebene (6) der Magnetspur (8) teilweise mehrteilig ausgebildet sind und die jeweiligen Teile (16a, 16b) quer (13) zu der Spurrichtung (7) um einen jeweiligen Versatz (11) zueinander angeordnet sind, so dass die jeweiligen Versätze der jeweiligen Teile (16a, 16b) die jeweiligen Codierbereiche (12) zwischen den jeweiligen Antriebselementen (9) bilden.

5. Magnetischer Antrieb nach Anspruch 1, **dadurch gekennzeichnet, dass** die Antriebselemente (9) in der Spurebene (6) der Magnetspur (8) teilweise zweiteilig ausgebildet sind und der erste Teil (16a) zu dem zweiten Teil (16b) quer (13) zu der Spurrichtung (7) um einen Versatz (11) zueinander angeordnet ist, so dass der Versatz (11) den Codierbereich (12) zwischen den jeweiligen Antriebselementen (9) bildet.

6. Magnetischer Antrieb nach einem der Ansprüche 2 bis 5, **dadurch gekennzeichnet, dass** der erste Körper (2) mindestens N Sensorelemente (4) aufweist, deren Anordnung in der Spurebene (6) entlang der Spurrichtung (7) an die Anordnung der Antriebselemente (9) angeglichen ist, so dass in Positionen des ersten Körpers (2) jeweils ein Sensorelement (4) der N Sensorelemente (4) über dem Codierbereich (12) eines jeweiligen Antriebselementes (9) der Antriebselemente (9) angeordnet ist.

7. Magnetischer Antrieb nach einem der Ansprüche 2 bis 5, **dadurch gekennzeichnet, dass** der erste Körper (2) mindestens 2N Sensorelemente (4) aufweist, deren Anordnung in der Spurebene (6) entlang der Spurrichtung (7) an die Anordnung der Antriebselemente (9) angeglichen ist, so dass in Positionen des ersten Körpers (2) jeweils zwei Sensorelemente (4) der 2N Sensorelemente (4) über dem Codierbereich (12) eines jeweiligen Antriebselementes (9) der Antriebselemente (9) angeordnet sind.

8. Magnetischer Antrieb nach einem der Ansprüche 2 bis 5 **dadurch gekennzeichnet, dass** der erste Körper (2) mindestens 2N Sensorelemente (4) aufweist, deren Anordnung in der Spurebene (6) entlang der Spurrichtung (7) an die Anordnung der Antriebselemente (9) angeglichen ist, so dass in Positionen des ersten Körpers (2) jeweils ein Sensorelement (4) der 2N Sensorelemente (4) über jeweils einem der Codierbereiche (12) eines jeweiligen Antriebselementes (9) der Antriebselemente (9) angeordnet ist.

9. Magnetischer Antrieb nach einem der Ansprüche 2 bis 5 **dadurch gekennzeichnet, dass** der erste Körper (2) mindestens 4N Sensorelemente (4) aufweist, deren Anordnung in der Spurebene (6) entlang der Spurrichtung (7) an die Anordnung der Antriebselemente (9) angeglichen ist, so dass in Positionen des ersten Körpers (2) jeweils zwei Sensorelemente (4) der 4N Sensorelemente (4) über jeweils einem der Codierbereiche (12) eines jeweiligen Antriebselementes (9) der Antriebselemente (9) angeordnet sind.

10. Magnetischer Antrieb nach einem der vorherigen Ansprüche, **dadurch gekennzeichnet, dass** jeweils R aufeinanderfolgende Codierbereiche (12) ein jeweiliges Codewort der Maßverkörperung (5) bilden und jedes Codewort entlang der Magnetspur (8) einmalig ist und eine Absolutposition darstellt.

11. Magnetischer Antrieb nach einem der vorherigen Ansprüche, **dadurch gekennzeichnet, dass** die Gesamtheit der durch die Codierbereiche (12) der Maßverkörperung (5) codierten Zeichenfolge als ein Pseudo-Random-Binary-Sequence-Code - PRBS-Code - ausgebildet ist.

12. Magnetischer Antrieb nach einem der vorherigen Ansprüche, **dadurch gekennzeichnet, dass** die Antriebselemente (9) als Permanentmagnete und/oder als Magnetspulen ausgebildet sind.

13. Magnetischer Antrieb nach einem der Ansprüche 1 bis 12, **dadurch gekennzeichnet** das der Antrieb (1) als Linearantrieb ausgebildet ist und eine Auswerteeinheit umfasst, die eingerichtet ist, Sensordaten der Sensorelemente (4) auszulesen und zu verarbeiten, um aus den Sensordaten die Absolutposition des ersten Körpers (2) zu berechnen, wobei die magnetischen Antriebselemente (9) des zweiten Körpers (3) mit magnetischen Antriebselementen (9) des ersten Körpers (2) zum Antrieb des ersten Körpers (2) magnetisch wechselwirken.

14. Verfahren zur Herstellung eines magnetischen Antriebs aufweisend einen magnetischen Absolutwertgeber, zur Bestimmung einer Absolutposition eines ersten Körpers (2) des magnetischen Antriebs (1), der sich verstellbar zu einem zweiten Körper (3) des magnetischen Antriebs (1) um eine Position, insbesondere um eine Längenposition, zu diesem verschiebt, wobei der erste Körper (2) Sensorelemente (4) aufweist, um aus einer Maßverkörperung (5) die Absolutposition zu ermitteln und wobei der zweite Körper (3) magnetische Antriebselemente (9) aufweist, das Verfahren die folgenden Schritte umfassend:
- Bereitstellen der magnetischen Antriebselemente (9);
- Anordnung der Antriebselemente (9) zu einer Magnetspur (8), indem die Antriebselemente (9), insbesondere äquidistant zueinander entlang einer Spurrichtung (7) positioniert werden;
- Bereitstellen magnetischer Codierbereiche (12) indem zumindest ein Teil der Antriebselemente (9) zumindest abschnittsweise modifiziert wird, indem die Codierbereiche (12) durch eine Beschichtung und/oder durch eine Ablation des jeweiligen
Antriebselementes (9) ausgebildet werden.

15. Verfahren zur Herstellung eines magnetischen Antriebs nach Anspruch 14 aufweisend einen magnetischen Absolutwertgeber, ferner die folgenden Schritte umfassend:
- Bereitstellen weiterer Codierbereiche (12), indem
- die Antriebselemente (9) um einen jeweiligen Versatz (11) zu einem der weiteren Antriebselemente (9) angeordnet werden, und/oder indem
- die jeweiligen Antriebselemente (9) um eine jeweilige Länge (14) zu einem der weiteren Antriebselemente (9) verkürzt werden.

## Claims

1. Magnetic drive (1) comprising an absolute encoder, for determining an absolute position of a first body (2) of the magnetic drive (1), which is displaceable relative to a second body (3) of the magnetic drive (1) by a position, in particular a linear position, wherein the first body (2) comprises sensor elements (4) in order to determine the absolute position from a scale embodiment (5) of the absolute encoder and wherein the second body (3) comprises magnetic drive elements (9) arranged in a track plane (6) along a track direction (7), in particular equidistantly spaced from one another, to form a magnetic track (8), wherein the drive elements (9) partly comprise coding regions (12) and the scale embodiment (5) is formed by the coding regions (12), **characterised in that** the coding regions (12) are formed by a coating and/or ablation of the respective drive element (9).

2. Magnetic drive according to claim 1, **characterised in that** the drive elements (9) are partly arranged with a respective offset (11) relative to one another in the track plane (6) of the magnetic track (8), transversely (13) to the track direction (7), in particular parallel to one another, so that the respective offset (11) forms the coding region (12) on the respective drive elements (9).

3. Magnetic drive according to claim 1 or 2, **characterised in that** the drive elements (9) partly have a respective length (14) in the track plane (6) of the magnetic track (8), transversely (13) to the track direction (7), so that the respective length (14) forms the coding region (12) on the respective drive elements (9).

4. Magnetic drive according to one of claims 1 to 3, **characterised in that** the drive elements (9) are partly of multi-part configuration in the track plane (6) of the magnetic track (8) and the respective parts (16a, 16b) are arranged with a respective offset (11) relative to one another transversely (13) to the track direction (7), so that the respective offsets of the respective parts (16a, 16b) form the respective coding regions (12) between the respective drive elements (9).

5. Magnetic drive according to claim 1, **characterised in that** the drive elements (9) are partly of two-part configuration in the track plane (6) of the magnetic track (8) and the first part (16a) is arranged with an offset (11) relative to the second part (16b) transversely (13) to the track direction (7), so that the offset (11) forms the coding region (12) between the respective drive elements (9).

6. Magnetic drive according to one of claims 2 to 5, **characterised in that** the first body (2) comprises at least N sensor elements (4), the arrangement of which in the track plane (6) along the track direction (7) is adapted to the arrangement of the drive elements (9), so that, in positions of the first body (2), in each case one sensor element (4) of the N sensor elements (4) is arranged above the coding region (12) of a respective drive element (9) of the drive elements (9).

7. Magnetic drive according to one of claims 2 to 5, **characterised in that** the first body (2) comprises at least 2N sensor elements (4), the arrangement of which in the track plane (6) along the track direction (7) is adapted to the arrangement of the drive elements (9), so that, in positions of the first body (2), in each case two sensor elements (4) of the 2N sensor elements (4) are arranged above the coding region (12) of a respective drive element (9) of the drive elements (9).

8. Magnetic drive according to one of claims 2 to 5, **characterised in that** the first body (2) comprises at least 2N sensor elements (4), the arrangement of which in the track plane (6) along the track direction (7) is adapted to the arrangement of the drive elements (9), so that, in positions of the first body (2), in each case one sensor element (4) of the 2N sensor elements (4) is arranged above in each case one of the coding regions (12) of a respective drive element (9) of the drive elements (9).

9. Magnetic drive according to one of claims 2 to 5, **characterised in that** the first body (2) comprises at least 4N sensor elements (4), the arrangement of which in the track plane (6) along the track direction (7) is adapted to the arrangement of the drive elements (9), so that, in positions of the first body (2), in each case two sensor elements (4) of the 4N sensor elements (4) are arranged above in each case one of the coding regions (12) of a respective drive element (9) of the drive elements (9).

10. Magnetic drive according to one of the preceding claims, **characterised in that** in each case R consecutive coding regions (12) form a respective code word of the scale embodiment (5) and each code word along the magnetic track (8) is unique and represents an absolute position.

11. Magnetic drive according to one of the preceding claims, **characterised in that** the entirety of the character sequence encoded by the coding regions (12) of the scale embodiment (5) is configured as a pseudo-random binary sequence code - PRBS code.

12. Magnetic drive according to one of the preceding claims, **characterised in that** the drive elements (9) are configured as permanent magnets and/or as magnetic coils.

13. Magnetic drive according to one of claims 1 to 12, **characterised in that** the drive (1) is configured as a linear drive and comprises an evaluation unit which is configured to read and process sensor data of the sensor elements (4) in order to calculate the absolute position of the first body (2) from the sensor data, wherein the magnetic drive elements (9) of the second body (3) magnetically interact with magnetic drive elements (9) of the first body (2) for driving the first body (2).

14. Method for manufacturing a magnetic drive comprising a magnetic absolute encoder, for determining an absolute position of a first body (2) of the magnetic drive (1), which is displaceable relative to a second body (3) of the magnetic drive (1) by a position, in particular by a linear position, wherein the first body (2) comprises sensor elements (4) in order to determine the absolute position from a scale embodiment (5) and wherein the second body (3) comprises magnetic drive elements (9), the method comprising the following steps:
- providing the magnetic drive elements (9);
- arranging the drive elements (9) to form a magnetic track (8) by positioning the drive elements (9), in particular equidistantly relative to one another, along a track direction (7);
- providing magnetic coding regions (12) by modifying at least part of the drive elements (9) at least in sections, wherein the coding regions (12) are formed by a coating and/or by an ablation of the respective drive element (9).

15. Method for manufacturing a magnetic drive according to claim 14 comprising a magnetic absolute encoder, further comprising the following steps:
- providing further coding regions (12) by
- arranging the drive elements (9) with a respective offset (11) relative to one of the further drive elements (9), and/or by
- shortening the respective drive elements (9) by a respective length (14) relative to one of the further drive elements (9).

## Revendications

1. Entraînement magnétique (1) comprenant un codeur absolu, pour déterminer une position absolue d'un premier corps (2) de l'entraînement magnétique (1), lequel est déplaçable relativement à un second corps (3) de l'entraînement magnétique (1) d'une position, en particulier d'une position longitudinale, dans lequel le premier corps (2) comprend des éléments capteurs (4) afin de déterminer la position absolue à partir d'une matérialisation de mesure (5) du codeur absolu et dans lequel le second corps (3) comprend des éléments d'entraînement magnétiques (9) agencés dans un plan de piste (6) le long d'une direction de piste (7), en particulier espacés les uns des autres de manière équidistante, **(pour former)** d'une piste magnétique (8), dans lequel les éléments d'entraînement (9) comprennent partiellement des zones de codage (12) et la matérialisation de mesure (5) est formée par les zones de codage (12), **caractérisé en ce que** les zones de codage (12) sont formées par un revêtement et/ou une ablation de l'élément d'entraînement (9) respectif.

2. Entraînement magnétique selon la revendication 1, **caractérisé en ce que** les éléments d'entraînement (9) sont partiellement agencés avec un décalage (11) respectif les uns par rapport aux autres dans le plan de piste (6) de la piste magnétique (8), transversalement (13) à la direction de piste (7), en particulier parallèlement les uns aux autres, de sorte que le décalage (11) respectif forme la zone de codage (12) sur les éléments d'entraînement (9) respectifs.

3. Entraînement magnétique selon la revendication 1 ou 2, **caractérisé en ce que** les éléments d'entraînement (9) présentent partiellement une longueur (14) respective dans le plan de piste (6) de la piste magnétique (8), transversalement (13) à la direction de piste (7), de sorte que la longueur (14) respective forme la zone de codage (12) sur les éléments d'entraînement (9) respectifs.

4. Entraînement magnétique selon l'une des revendications 1 à 3, **caractérisé en ce que** les éléments d'entraînement (9) sont partiellement réalisés en plusieurs parties dans le plan de piste (6) de la piste magnétique (8) et les parties respectives (16a, 16b) sont agencées avec un décalage (11) respectif les unes par rapport aux autres transversalement (13) à la direction de piste (7), de sorte que les décalages respectifs des parties respectives (16a, 16b) forment les zones de codage (12) respectives entre les éléments d'entraînement (9) respectifs.

5. Entraînement magnétique selon la revendication 1, **caractérisé en ce que** les éléments d'entraînement (9) sont partiellement réalisés en deux parties dans le plan de piste (6) de la piste magnétique (8) et la première partie (16a) est agencée avec un décalage (11) par rapport à la seconde partie (16b) transversalement (13) à la direction de piste (7), de sorte que le décalage (11) forme la zone de codage (12) entre les éléments d'entraînement (9) respectifs.

6. Entraînement magnétique selon l'une des revendications 2 à 5, **caractérisé en ce que** le premier corps (2) comprend au moins N éléments capteurs (4), dont l'agencement dans le plan de piste (6) le long de la direction de piste (7) est adapté à l'agencement des éléments d'entraînement (9), de sorte que, dans des positions du premier corps (2), respectivement un élément capteur (4) des N éléments capteurs (4) est agencé au-dessus de la zone de codage (12) d'un élément d'entraînement (9) respectif des éléments d'entraînement (9).

7. Entraînement magnétique selon l'une des revendications 2 à 5, **caractérisé en ce que** le premier corps (2) comprend au moins 2N éléments capteurs (4), dont l'agencement dans le plan de piste (6) le long de la direction de piste (7) est adapté à l'agencement des éléments d'entraînement (9), de sorte que, dans des positions du premier corps (2), respectivement deux éléments capteurs (4) des 2N éléments capteurs (4) sont agencés au-dessus de la zone de codage (12) d'un élément d'entraînement (9) respectif des éléments d'entraînement (9).

8. Entraînement magnétique selon l'une des revendications 2 à 5, **caractérisé en ce que** le premier corps (2) comprend au moins 2N éléments capteurs (4), dont l'agencement dans le plan de piste (6) le long de la direction de piste (7) est adapté à l'agencement des éléments d'entraînement (9), de sorte que, dans des positions du premier corps (2), respectivement un élément capteur (4) des 2N éléments capteurs (4) est agencé au-dessus de respectivement l'une des zones de codage (12) d'un élément d'entraînement (9) respectif des éléments d'entraînement (9).

9. Entraînement magnétique selon l'une des revendications 2 à 5, **caractérisé en ce que** le premier corps (2) comprend au moins 4N éléments capteurs (4), dont l'agencement dans le plan de piste (6) le long de la direction de piste (7) est adapté à l'agencement des éléments d'entraînement (9), de sorte que, dans des positions du premier corps (2), respectivement deux éléments capteurs (4) des 4N éléments capteurs (4) sont agencés au-dessus de respectivement l'une des zones de codage (12) d'un élément d'entraînement (9) respectif des éléments d'entraînement (9).

10. Entraînement magnétique selon l'une des revendications précédentes, **caractérisé en ce que** respectivement R zones de codage (12) consécutives forment un mot de code respectif de la matérialisation de mesure (5) et chaque mot de code le long de la piste magnétique (8) est unique et représente une position absolue.

11. Entraînement magnétique selon l'une des revendications précédentes, **caractérisé en ce que** l'ensemble de la séquence de caractères codée par les zones de codage (12) de la matérialisation de mesure (5) est réalisé sous forme d'un code à séquence binaire pseudo-aléatoire - code PRBS.

12. Entraînement magnétique selon l'une des revendications précédentes, **caractérisé en ce que** les éléments d'entraînement (9) sont réalisés sous forme d'aimants permanents et/ou de bobines magnétiques.

13. Entraînement magnétique selon l'une des revendications 1 à 12, **caractérisé en ce que** l'entraînement (1) est réalisé sous forme d'entraînement linéaire et comprend une unité d'évaluation qui est configurée pour lire et traiter des données de capteur des éléments capteurs (4), afin de calculer, à partir des données de capteur, la position absolue du premier corps (2), dans lequel les éléments d'entraînement magnétiques (9) du second corps (3) interagissent magnétiquement avec des éléments d'entraînement magnétiques (9) du premier corps (2) pour entraîner le premier corps (2).

14. Procédé de fabrication d'un entraînement magnétique comprenant un codeur absolu magnétique, pour déterminer une position absolue d'un premier corps (2) de l'entraînement magnétique (1), lequel se déplace relativement à un second corps (3) de l'entraînement magnétique (1) d'une position, en particulier d'une position longitudinale, dans lequel le premier corps (2) comprend des éléments capteurs (4) afin de déterminer la position absolue à partir d'une matérialisation de mesure (5) et dans lequel le second corps (3) comprend des éléments d'entraînement magnétiques (9), le procédé comprenant les étapes suivantes:
- Fourniture des éléments d'entraînement magnétiques (9);
- Agencement des éléments d'entraînement (9) en une piste magnétique (8), en positionnant les éléments d'entraînement (9), en particulier de manière équidistante les uns par rapport aux autres, le long d'une direction de piste (7);
- Fourniture de zones de codage magnétiques (12) en modifiant au moins une partie des éléments d'entraînement (9) au moins par sections, dans lequel les zones de codage (12) sont formées par un revêtement et/ou par une ablation de l'élément d'entraînement (9) respectif.

15. Procédé de fabrication d'un entraînement magnétique selon la revendication 14 comprenant un codeur absolu magnétique, comprenant en outre les étapes suivantes :
- Fourniture de zones de codage supplémentaires (12), en
- agençant les éléments d'entraînement (9) avec un décalage (11) respectif par rapport à l'un des autres éléments d'entraînement (9), et/ou en
- raccourcissant les éléments d'entraînement (9) respectifs d'une longueur (14) respective par rapport à l'un des autres éléments d'entraînement (9).
